# EUROPÄISCHE PATENTSCHRIFT

(11) **EP 1 721 994 B1**
(45) Veröffentlichungstag und Bekanntmachung des Hinweises auf die Patenterteilung: **08.08.2012**
(21) Anmeldenummer: 06006792.3
(22) Anmeldetag: 30.03.2006
(51) Int. Cl.: C21D 1/10, C21D 9/00, H05B 6/02, C21D 1/42, C21D 9/30

(54) **Induktionserwärmungsanlage zum gleichzeitigen Erwärmen von mehreren Werkstücken**
Induction heating device for simultaneous heating of multiple workpieces
Installation de chauffage par induction pour le chauffage de plusieurs pièces de façon simultanée

(30) Priorität: 11.05.2005 DE 102005021856
(43) Veröffentlichungstag der Anmeldung: 15.11.2006
(73) Patentinhaber: INDUCTOHEAT Europe GmbH, 73262 Reichenbach/Fils (DE)
(72) Erfinder: Händle, Siegfried, 73061 Ebersbach (DE)
(74) Vertreter: Schmidt, Steffen J.

(56) Entgegenhaltungen:
- EP-A- 0 072 901
- EP-A- 0 090 488
- US-A- 3 755 010
- US-A- 4 307 278
- US-A- 4 433 226
- PATENT ABSTRACTS OF JAPAN Bd. 008, Nr. 122 (C-227), 8. Juni 1984 (1984-06-08) & JP 59 035626 A (TOUKIYOU KOUSHIYUUHA DENKIRO KK), 27. Februar 1984 (1984-02-27)

## Beschreibung

### Hintergrund der Erfindung

Die vorliegende Erfindung betrifft eine elektrisch zu betreibende Induktionserwärmungsanlage. Die Anwendungsbereiche derartiger Anlagen sind weitgestreut von Härteanwendungen über Schweiß- und Sinterprozessen bis hin zu speziellen Einsätzen wie die Erwärmung von Materialien im Vakuum oder unter Schutzgas, welche mit der herkömmlichen Gaserwärmung nicht zu realisieren wären. Die Induktionshärtung ist ein bewährtes Verfahren zur Qualitätssteigerung von Präzisionsteilen aus Stahl, Stahlguss, oder Gusseisen. Dabei wird das zu härtende Werkstück in sehr kurzer Zeit (ggf. Bruchteilen von Sekunden) auf Rotglut gebracht und anschließend sofort wieder abgeschreckt. Als Abschreckmittel werden Wasser, Luft, Öl oder Emulsionen eingesetzt. Bei der Härtung spielt der Kohlenstoffgehalt im Eisen eine wichtige Rolle. Für einen nennenswerte Härte sollte der Kohlenstoffanteil mindestens 0,35 % betragen.

Vor allem kompliziert geformte metallische Werkstücke werden lediglich in bestimmten Bereichen durch Induktion auf erforderliche Härtetemperatur gebracht und anschließend abgeschreckt. So entsteht in diesem Bereich, z.B. auf der Laufbahn von Kurvenscheiben, ein harter, verschleißfester Stahl. Das Induktionshärten wird insbesondere automatisiert, das heißt mit Handhabungseinrichtungen zum Be- und Entladen in der Großserienproduktion zum Beispiel zum Härten von Nocken- und Kurbelwellen eingesetzt. Die Induktionserwärmung wird auch eingesetzt, um lokale Bereiche eines gehärteten Werkstückes wieder anzulassen.

Bei der induktiven Erwärmung entsteht die Wärme im Werkstück selbst. Grundsätzlich lassen sich mit der induktiven Erwärmung alle elektrisch leitenden Stoffe erwärmen. In der Praxis werden hauptsächlich Metalle und Legierungen aufgrund ihrer guten elektrischen Leitfähigkeit induktiv erwärmt.

Eine primäre Spule bildet einen Induktor, welcher das magnetische Wechselfeld aufbaut. Das zu bearbeitenden Werkstück bildet eine sekundäre, kurzgeschlossene Spule. Wenn durch die primäre Spule ein Wechselstrom fließt, wird in der sekundären Spule (dem Werkstück) eine Spannung induziert, welche im Werkstück induzierte Wirbelströme zur Folge hat. Dieser Strom führt zu einer Erwärmung des Materials. Die Wärme gelangt hier nicht von der Oberfläche her in das Werkstück, sondern sie entsteht in der zu härtenden Schicht. Die Härtetiefe kann durch Variation der Stromfrequenz beeinflusst werden. Sie wird mit zunehmender Frequenz aufgrund des sog. Skin-Effektes geringer. Beim Erwärmen auf Härtetemperatur wechselt die Struktur des Eisengitters von kubisch-raumzentriert zu kubisch-flächenzentriert. Die Kohlenstoffatome diffundieren ins Metallgitter. Durch sehr schnelles Abkühlen (Abschrecken) klappt das Metallgitter wieder zurück, ohne dass die Kohlenstoffatome ihre Position wechseln können. Die Kohlenstoffatome werden im Metallgitter festgehalten. Die dadurch erzielte Verzerrung des Raumgitters macht sich makroskopisch als Härtesteigerung des Materials bemerkbar. Durch diese Gefügeumwandlung lassen sich Härte, Sprödigkeit, Zähigkeit, innere Spannungen u.ä. beeinflussen.

Wesentliche Vorteile der induktiven Erwärmung sind der hohe Wirkungsgrad, die hohe Wiederholgenauigkeit, die Möglichkeit der punktuellen Erwärmung ohne Peripherie zu erwärmen, flexible Anpassungsmöglichkeiten der Anlage an verschiedenste Werkstücke, und die Werkstücke können gleichmäßig erwärmt werden. Außerdem ist eine schnelle Erwärmung, und ein hoher Durchsatz realisierbar. Weiterhin ist die Zunderarmut am behandelten Werkstück und der geringe Verzug des Werkstückes zu nennen.

### Stand der Technik

Aus der DE 1 98 08 763 C1 ist eine Vorrichtung zum Härten zylindrischer Lagerstellen einer Welle bekannt, bei der mindestens einer der Übergangsradien zu den angrenzenden Wellenteilen hinterstochen ausgebildet ist. Dabei sind besondere Maßnahmen erforderlich, um zu gewährleisten, dass auch die hinterstochenen Übergangsradien im für ein ordnungsgemäßes Härten ausreichenden Maße erwärmt werden. Die Vorrichtung ist mit zwei voneinander unabhängigen Erwärmungseinheiten ausgestattet, von denen jede einen Induktor und eine zugehörige Stromversorgungseinrichtung umfasst.

Aus der DE 1 97 16 294 C1 ist eine Vorrichtung zum induktiven Härten von profilierten Nockenwellen bekannt. Die Vorrichtung hat einen Induktor, der mehrere während des Härtevorgangs von einem Induktionsstrom durchflossene Axial-Äste und Radial-Äste aufweist. An den Axial-Ästen sind Dynamobleche vorgesehen, mittels welchen das Magnetfeld in radialer Richtung fokussierbar ist. Die Lage und die Breite der Dynamobleche sind an ein Oberflächenprofil der Nockenwelle derart angepasst, dass die Fokussierung auf Bereiche mit geringerem Durchmesser gerichtet ist.

Aus der DE 1 00 34 421 A1 ist ein Induktor zum induktiven Härten von Werkstücken bekannt, mit mindestens zwei Induktorköpfen, die durch eine Stromleiteranordnung miteinander leitend verbunden sind und die verschiebbar zueinander angeordnet sind. Der Induktor hat ein Induktorgehäuse aus Glashartgewebe, in dem sämtliche Baugruppen eingebaut sind.

Wesentliche Bauteile des Induktors sind mehrere stromdurchflossene Heizleiter. Die Heizleiter sind in den Induktorköpfen angeordnet, die durch eine Verschiebeeinheit miteinander verbunden sind. Die Induktorköpfe sind mit der Stromleiteranordnung mittels Schrauben verbunden. Die Stromleiteranordnung umfasst Leiterelemente, die über einen Kühlmittelkanal verfügt, der von einem Kühlmittel durchströmt werden kann.

Aus der DE 1 00 34 357 C1 ist eine Vorrichtung zum Härten der eine Vertiefung zwischen jeweils zwei Zähnen eines Zahnrades oder einer Zahnstange begrenzenden Flächen mit einem Induktor zum Erwärmen der jeweils zu härtenden Fläche bekannt. Diese Vorrichtung hat eine Abschreckeinrichtung zum Abkühlen der erwärmten jeweils zu härtenden Fläche und mindestens einer Stelleinrichtung zum Verstellen der Positionen des Induktors in Abhängigkeit vom Signal eines Abstandsmess-Sensors, der den jeweiligen Abstand des Heizleiters des Induktors von der zu härtenden Fläche feststellt. Außerdem ist ein zweiter Abstandsmess-Sensor vorgesehen, der einer anderen zu härtenden Fläche zugeordnet ist und die Verstellung des Induktors erfolgt in Abhängigkeit sowohl vom Signal des ersten Abstandsmess-Sensors als auch vom Signal des zweiten Abstandsmess-Sensors.

Dokument EP 0 090 488 A2 beschreibt eine induktive Erwärmungsanlage für längliche Werkstücke. Dabei wird eine paarweise Synchronisation von Werkstücken auf zwei zueinander parallel verlaufenden Fördergängen auf der Basis von Sensorsignalen mittels einer mechanischen Rückhalteeinrichtung für die Werkstücke durchgeführt. In Abhängigkeit der Sensorsignale werden außerdem in Serie geschaltete Induktionsspulen mit einer Hochfrequenzquelle oder einer Niederfrequenzquelle verbunden, um ein Erhitzen des Werkstücks an seinen jeweiligen Querschnitt anzupassen.

Dokument US 4,433,226 beschreibt ein Verfahren und eine Vorrichtung zum induktiven Erwärmen eines länglichen Werkstücks. Das längliche Werkstück weist dabei einen gleichmäßigen Querschnitt auf. Nur an den Enden des Werkstücks sind Verbreiterungen vorgesehen. Ein mehrstufiger Induktor ist koaxial um einen Bearbeitungsweg des länglichen Werkstücks angeordnet, wobei das Werkstück mit einer vorgegebenen Vorschubgeschwindigkeit durch den Induktor bewegt wird. Der mehrstufige Induktor ist auf eine erste Leistungsstufe eingestellt, die geeignet ist, die verbreiterten Enden des Werkstücks zu erwärmen. Nach einem ersten Zeitintervall, bestimmt durch die Bewegung des Werkstücks entlang des Bearbeitungsweges, wird der Induktor automatisch auf eine zweite Leistungsstufe zurückgeschaltet, die geeignet ist, den im Vergleich zu den verbreiterten Enden dünneren Durchmesser des Werkstücks zu erwärmten.

Aus der betrieblichen Praxis sind einspurige Horizontalanlagen mit kontinuierlichem Werkstücktransport bekannt, bei denen zwei Transportwalzen parallel zueinander angeordnet und mit einem Walzenrotationsantrieb ausgestattet sind. Parallel zur Mittellängsachse der zwei Transportwalzen wird das zu härtende Werkstück gefördert. Den Transportwalzen nachgeordnet ist ein Härte-Induktor zur Werkstückerwärmung, und ihnen vorgeordnet ist ein Werkstückeinzugsapparat, der für eine kontinuierliche Werkstückzufuhr sorgt. Der Härte-Induktor wird von einem Härte-Umrichter gespeist. Je nach Anforderung kann zusätzlich ein Anlass-Induktor mit einem entsprechenden Anlass-Umrichter dem Härte-Induktor nachgeordnet sein. Alternativ dazu kann das Anlassen auch aus der Restwärme erfolgen. Bei diesem Anlagenkonzept ist es möglich, die Werkstücke sowohl über die komplette Länge, als auch partiell zu härten.

### Der Erfindung zugrundeliegendes Problem

Alle vorstehend beschriebenen Konzepte haben gemeinsam, dass mit ihnen der insbesondere in der Großserienfertigung erforderliche Ausstoß an gehärteten Werkstücken in kostengünstiger Weise realisierbar ist. Das Aufrüsten bekannter Anordnungen für gesteigerte Stückzahlen ist sehr kostenintensiv und benötigt viel Bauraum.

### Erfindungsgemäße Lösung

Zur Behebung dieser Nachteile lehrt die Erfindung einen Induktionserwärmungsanlage, die durch die Merkmale des Anspruchs 1 definiert ist.

### Aufbau, Weiterbildungen und Vorteile der erfindungsgemäßen Lösung

Eine Induktionserwärmungsanlage gemäß der vorliegenden Erfindung zur Wärmebehandlung von elektrisch leitenden Werkstücken hat wenigstens zwei mit einem, hinsichtlich seiner Leistungsabgabe steuerbaren Wechselstromgenerator zu verbindende Härte-Induktionsspulen, die miteinander elektrisch in Reihe geschaltet sind, und eine an die Gestalt wenigstens einer zu behandelnden Stelle der Werkstücke angepasste Form haben, um die Werkstücke zumindest an dieser Stelle mittels der Härte-Induktionsspulen zu erwärmen.

Weiterhin hat die Anlage eine der Zahl der Härte-Induktionsspulen entsprechenden Zahl von ersten Fördergängen, die zumindest mit einem Teil ihrer Erstreckung aufstromseitig zu den Härte-Induktionsspulen angeordnet sind, um diesen die Werkstücke zuzuführen. Außerdem hat die Anlage eine der Zahl der ersten Fördergänge entsprechende Zahl von Werkstückeinzugsvorrichtungen, um diesen aus wenigstens einer Quelle kommende Werkstücke zuzuführen, erste Antriebseinrichtungen um die Werkstückeinzugsvorrichtungen und/oder die ersten Fördergänge anzutreiben, sowie eine Sensoreinrichtung, um die Relativposition von in zueinander benachbarten Werkstückeinzugsvorrichtungen oder Fördergängen befindlichen Werkstücken bezogen auf deren Förderrichtung zu erfassen und entsprechende Sensorsignale zu erzeugen.

Schließlich ist die Anlage dazu eingerichtet, mit einer Regelungseinrichtung verbunden zu werden, die in Abhängigkeit von den Sensorsignalen aus der Sensoreinrichtung die Leistungsabgabe des steuerbaren Wechselstromgenerators beeinflusst sowie die Antriebseinrichtungen für die Werkstückeinzugsvorrichtungen und/oder die ersten Fördergänge im Sinne einer Synchronisation der Werkstücke in unterschiedlichen Fördergängen auf ihrem Weg zu den Härte-Induktionsspulen hin mit Ansteuersignalen beschickt.

Dabei hat die Erfindung erkannt, dass bei einer solchen Anordnung auftretender Schlupf von Werkstücken und die Summierung von Werkstücktoleranzen beim Werkstücktransport in den unterschiedlichen Fördergängen mit Einflüssen auf das Härteergebnis, vorwiegend bei Werkstücken mit partiellen Härtestellen und bei abgesetzten Werkstücken auf sehr effiziente Weise behebbar ist. Außerdem ist die Fertigungskapazität auf sehr kostengünstige Weise vergrößert, da es nicht erforderlich ist, für eine Vervielfachung (zum Beispiel) Verdoppelung des Ausstoßes an gehärteten Werkstücken alle Komponenten der Anlage (Generator, Förderstrecken, etc.) zu verdoppeln. Vielmehr erlaubt das erfindungsgemäße Konzept, Teile der Anlage (Generator, Teile der Förderstrecken, etc.) mehrfach zu nutzen.

Erfindungsgemäß sind die Härte-Induktionsspulen nebeneinander angeordnet. Weiterhin sind erfindungsgemäß die Härte-Induktionsspulen abstromseitig zu den ersten Fördergängen angeordnet.

Bevorzugt haben die ersten Fördergänge Schraubenwalzen, die parallel nebeneinander angeordnet sind, wobei durch paarweise nebeneinander angeordnete Schraubenwalzen jeweils eine Fördermulde gebildet ist, in der die Werkstücke den Härte-Induktionsspulen zuzuführen sind.

Die Antriebseinrichtungen für die Werkstückeinzugsvorrichtungen und/oder die ersten Fördergänge sind durch die Regelungseinrichtung so anzusteuern, dass die von den Werkstückeinzugsvorrichtungen auf die ersten Fördergänge geförderten Werkstücke in direktem Kontakt aufeinander folgen. Dabei schieben quasi die unmittelbar aus den Werkstückeinzugsvorrichtungen kommenden Werkstücke die vor ihnen in den Fördergänge befindlichen Werkstücke zu den Härte-Induktionsspulen hin.

Die ersten Fördergänge können erfindungsgemäß Niederhalter aufweisen, um die Werkstücke während des Zuführens zu den Härte-Induktionsspulen in ihren jeweiligen Fördermulden zu halten.

Abstromseitig zu den Härte-Induktionsspulen können erfindungsgemäß jeweilige Anlass-Induktionsspulen angeordnet sein. Zwischen den Härte-Induktionsspulen und den Anlass-Induktionsspulen sind in diesem Fall zweite Fördergänge angeordnet. Dabei können erfindungsgemäß die zweiten Fördergänge mit zweiten Antriebseinrichtungen gekoppelt sein, um die Werkstücke von den Härte-Induktionsspulen zu den Anlass-Induktionsspulen zu fördern.

Die Sensoreinrichtung hat für jede der Härte-Induktionsspulen einen Sensor, der dazu eingerichtet ist, charakteristische Stellen, wie Anfangskanten, Endkanten, Fasen, Einstiche, Kugellaufbahnen oder Schaltkanten an den Werkstücken zu erfassen und entsprechende Sensorsignale für die Regelungseinrichtung zu erzeugen.

Erfindungsgemäß ist die Regelungseinrichtung dazu eingerichtet und/oder dazu programmiert, die Ansteuersignale für die Antriebseinrichtungen und/oder die Fördergänge so zu erzeugen, dass ein Schlupf der Werkstücke in den jeweiligen Fördergängen bzw. Werkstückeinzugsvorrichtungen und/oder Abmessungstoleranzen der Werkstücke zumindest nahezu kompensiert wird. Dies bewirkt, dass die zu behandelnden Stellen der Werkstücke im Wesentlichen gleichzeitig die Härte-Induktionsspulen und/oder die Anlass-Induktionsspulen erreichen.

Erfindungsgemäß können die Niederhalter mit Niederhalter-Antrieben gekoppelt sein, um in den jeweiligen Fördergängen befindliche Werkstücke in ihrer Beweglichkeit einzuschränken. Beim Bestromen der Härte-Induktionsspulen und/oder der Anlass-Induktionsspulen kann es nämlich vorkommen, dass durch das induzierte Magnetfeld das Werkstück sich relativ zur Spule bewegt.

Den Härte-Induktionsspulen und/oder den Anlass-Induktionsspulen kann erfindungsgemäß jeweils eine Abschreck-Einrichtung zum Benetzen der Werkstücke mit Kühlflüssigkeit zugeordnet sein. Der Ausstoß von Kühlflüssigkeit aus der Abschreck-Einrichtung kann ungesteuert, also kontinuierlich während des Betriebes der Induktionserwärmungsanlage erfolgen, oder durch die Regelungseinrichtung gesteuert werden.

Die Sensoreinrichtung ist von der jeweiligen Härte-Induktionsspule soweit entfernt anzuordnen, dass Störeinflüsse auf die Sensoreinrichtung minimiert sind, die unter anderem von einem Betreiben, d.h. Bestromen der Härte-Induktionsspulen und/oder dem Ausstoßen von Kühlflüssigkeit aus der Abschreck-Einrichtung mit einem damit einhergehenden Spritzen oder Dampfbildung der Kühlflüssigkeit, und/oder der Temperaturentwicklung aus von der Härte-Induktionsspule behandelten Werkstücken resultieren können.

In einer bevorzugten Ausführungsform der erfindungsgemäßen Induktionserwärmungsanlage weist die Sensoreinrichtung eine Laserstrahl-Sende-/Empfangseinrichtung auf um charakteristische Merkmale der Werkstücke zu erfassen.

Die Induktionserwärmungsanlage kann in einer Einfassung angeordnet sein, in die Schutzgas eingebracht werden kann, und in der die Schutzgasatmosphäre aufrecht erhalten werden kann.

Schließlich ist die Induktionserwärmungsanlage mit einer Auffangvorrichtung für die Kühlflüssigkeit aus der Abschreck-Einrichtung ausgestattet.

Weitere Merkmale, Eigenschaften, Vorteile und mögliche Abwandlungen werden anhand der nachstehenden Beschreibung erläutert, in der auf die beigefügten Zeichnungen Bezug genommen ist.

### Kurzbeschreibung der Zeichnung

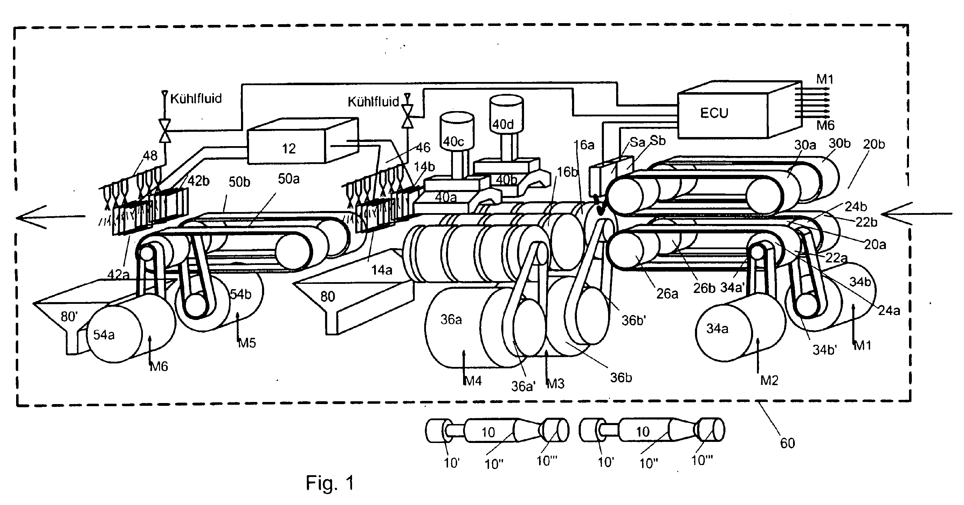

In Fig. 1 ist eine Ausführungsform einer erfindungsgemäßen Induktionserwärmungsanlage schematisch in perspektivischem Seitenansicht veranschaulicht.

### Detaillierte Beschreibung derzeit bevorzugter Ausführungsformen

In Fig. 1 ist eine erste Ausführungsform einer erfindungsgemäßen Induktionserwärmungsanlage zur Wärmebehandlung von elektrisch leitenden Werkstücken 10 veranschaulicht. Zur Erläuterung sind hier die Werkstücke 10 als Bolzen gezeigt, die eine Anzahl von charakteristischen Merkmalen haben (wie Anfangskanten, Endkanten, Fasen, Einstiche, Kugellaufbahnen oder Schaltkanten 10', 10", 10 "', von denen einige mit Bezugszeichen versehen sind) Die Werkstücke 10 sind an einigen Stellen entlang ihrer Längserstreckung über den gesamten Umfang zu härten.

Die Anlage hat in der gezeigten Ausgestaltung zwei mit einem, hinsichtlich seiner Leistungsabgabe steuerbaren Wechselstromgenerator 12 zu verbindende Härte-Induktionsspulen 14a, 14b, die miteinander elektrisch in Reihe geschaltet sind, und eine an die Gestalt von zu behandelnden Stellen der Werkstücke 10 angepasste Form haben, um die Werkstücke 10 zumindest an dieser Stelle mittels der Härte-Induktionsspulen 14a, 14b zu erwärmen. Unter an die Gestalt von zu behandelnden Stellen der Werkstücke 10 angepasste Form wird hier verstanden, dass die Härte-Induktionsspulen 14a, 14b geeignet und so geformt sind, an den zu behandelnden Stellen durch Induktion eine solche Wärme hervorzurufen, dass diese Stelle eine Härtung erfährt.

Aufstromseitig zu den Härte-Induktionsspulen 14a, 14b ist, auf diese in der Orientierung ausgerichtet, eine deren Zahl entsprechende Zahl von ersten Fördergängen 16a, 16b, um den Härte-Induktionsspulen 14a, 14b die Werkstücke 10 zuzuführen. In der gezeigten Ausführungsform sind die ersten Fördergänge 16a, 16b durch Schraubenwalzen gebildet, die parallel nebeneinander angeordnet sind. Durch paarweise nebeneinander angeordnete Schraubenwalzen ist jeweils eine Fördermulde gebildet, in der die Werkstücke 10 nebeneinander den Härte-Induktionsspulen 14a, 14b zuzuführen sind. In der vorliegenden Ausführungsform sind drei Schraubenwalzen vorgesehen, durch welche die zwei Fördermulden gebildet sind. Ersichtlich "teilen" sich die beiden Fördermulden die mittlere Schraubenwalze. Es versteht sich, dass bei einer Anlage mit drei Induktionsspulen, Fördergängen, etc. vier Schraubenwalzen vorzusehen sind, usw. Die Härte-Induktionsspulen 14a, 14b sind nebeneinander angeordnet und im Wesentlichen rechtwinklig zu den ersten Fördergängen 16a, 16b orientiert. Damit werden gleichzeitig und in der gleichen Relativposition zu dem jeweiligen der ersten Fördergänge 16a, 16b antransportierte Werkstücke gleichzeitig und an der jeweiligen Härte-Induktionsspule 14a, 14b behandelt.

Aufstromseitig zu den ersten Fördergängen 16a, 16b ist eine deren Zahl entsprechende Zahl von Werkstückeinzugsvorrichtungen 20a, 20b angeordnet, um den ersten Fördergängen 16a, 16b aus einer - nicht weiter veranschaulichten Vorratsquelle - kommende Werkstücke 10 zuzuführen. Im gezeigten Ausführungsbeispiel sind die Werkstückeinzugsvorrichtungen 20a, 20b als Traktionsbandförderer ausgestaltet, bei denen jeweils ein unteres Endlosband 22a, 22b über eine untere angetriebene Rolle 24a, 24b und eine untere nicht angetriebene Rolle 26a, 26b geführt ist. Um eine sichere und positiv kontrollierte Förderbewegung der Werkstücke 10 zu erreichen, sind über den unteren, angetriebenen Endlosbändern 22a, 22b im Abstand angeordnete obere, ebenfalls über Rollen geführte Endlosbänder 30a, 30b vorgesehen, die jedoch nicht angetrieben sind. Der Abstand zwischen den unteren und den oberen Endlosbändern 22a, 22b; 30a, 30b ist auf die Abmessungen der zwischen ihnen einzubringenden Werkstücken 10 abzustimmen und ist mit einer - nicht weiter veranschaulichten - Einstellvorrichtung variabel. Vorzugsweise sind die unteren und die oberen Endlosbänder 22a, 22b; 30a, 30b profiliert ausgeführt, so dass eine präzise Traktion der Werkstücke 10 sichergestellt ist.

Im gezeigten Ausführungsbeispiel sind sowohl die Werkstückeinzugsvorrichtungen 20a, 20b, als auch die ersten Fördergänge 16a, 16b durch erste Antriebseinrichtungen 34a, 34b bzw. 36a, 36b in Gestalt von frequenz-gesteuerten oder servo-gesteuerten Elektromotoren angetrieben. Über Zahnriementriebe 34a', 34b'; 36a', 36b' wirken die Elektromotoren auf die angetriebenen Rollen 24a, 24b der Werkstückeinzugsvorrichtungen 20a, 20b und die ersten Fördergänge 16a, 16b.

In einer am Auslaß der Werkstückeinzugsvorrichtungen 20a, 20b angeordneten Sensoreinrichtung Sa, Sb kann die Relativposition von in zueinander benachbarten Werkstückeinzugsvorrichtungen 20a, 20b oder Fördergängen 16a, 16b befindlichen Werkstücken 10 bezogen auf deren Förderrichtung erfasst werden um entsprechende Sensorsignale zu erzeugen. Die Sensoreinrichtung ist durch zwei Laser-Sende-/Empfangseinrichtung Sa, Sb gebildet, mit denen für jede der Härte-Induktionsspulen 14a, 14b charakteristische Merkmale, wie Anfangskanten, Endkanten, Fasen, Einstiche, Kugellaufbahnen oder Schaltkanten 10', 10", 10''' an den Werkstücken 10 zu erfassen und entsprechende Sensorsignale zu erzeugen. Die Sensoreinrichtung ist von der jeweiligen Härte-Induktionsspule soweit entfernt angeordnet, dass Störeinflüsse aus dem Betreiben der Anlage auf die Sensoreinrichtung minimiert sind.

Diese Sensorsignale werden einer Regelungseinrichtung ECU zugeführt, die in Abhängigkeit von den Sensorsignalen aus der Sensoreinrichtung Sa, Sb die Leistungsabgabe des steuerbaren Wechselstromgenerators 12 beeinflusst sowie die Antriebseinrichtungen 34a, 34b bzw. 36a, 36b für die Werkstückeinzugsvorrichtungen 20a, 20b und die ersten Fördergänge 16a, 16b mit Ansteuersignalen beschickt. Dabei werden diese Ansteuersignale so geformt, dass eine Synchronisation der Werkstücke 10 in den unterschiedlichen Fördergängen 16a, 16b auf ihrem Weg zu den Härte-Induktionsspulen 14a, 14b hin. Dabei sind die Antriebseinrichtungen 34a, 34b bzw. 36a, 36b für die Werkstückeinzugsvorrichtungen 20a, 20b und die ersten Fördergänge 16a, 16b durch die Regelungseinrichtung ECU so anzusteuern, dass die von den Werkstückeinzugsvorrichtungen 20a, 20b auf die ersten Fördergänge 16a, 16b geförderten Werkstücke 10 in direktem Kontakt (hintere Stirnfläche des vorderen Werkstückes liegt an vorderer Stirnfläche des hinteren Werkstückes direkt an) aufeinander folgen. Mit anderen Worten werden die Werkstücke 10 von nachfolgenden Werkstücken 10 in Richtung zu den jeweiligen Härte-Induktionsspulen geschoben.

Das durch die Regelungseinrichtung ECU zu erreichende Regelungsziel ist, dass Schlupf der Werkstücke in den nebeneinander befindlichen jeweiligen Fördergängen bzw. Werkstückeinzugsvorrichtungen sowie etwaige Abmessungstoleranzen der Werkstücke zumindest annähernd so kompensiert werden, dass die zu behandelnden (d.h. zu härtenden) Stellen der Werkstücke praktisch gleichzeitig die Härte-Induktionsspulen erreichen. Durch entsprechende Ansteuerung der elektrisch in Serie geschalteten Härte-Induktionsspulen wird auf diese Weise erreicht, dass die Werkstücke in den beiden Bahnen übereinstimmend und gleichzeitig gehärtet werden. Im Einzelnen funktioniert dies wie folgt:
Der Abstand zwischen den Laserstrahl-Sende-/Empfangseinrichtungen Sa, Sb und den Härte-Induktionsspulen 14a, 14b entlang der ersten Fördergänge 16a, 16b ist bekannt. Nachdem jeweils ein übereinstimmendes charakteristisches Merkmal (zum Beispiel eine Anfangskante) an zwei, zumindest ungefähr nebeneinander befindlichen Werkstücken an der Laser-Sende-/Empfangseinrichtung Sa, Sb detektiert wurde, wird durch die Regelungseinrichtung ECU die Fördergeschwindigkeit dieser und der nachfolgenden Werkstücke in der jeweiligen Werkstückeinzugsvorrichtung 20a, 20b so beeinflusst (beschleunigt oder verlangsamt), dass die beiden in den ersten Fördergängen 16a, 16b geförderten Werkstücke 10 praktisch gleichzeitig die Härte-Induktionsspulen 14a, 14b erreichen. Abhängig davon, an welcher Position entlang des Werkstückes relativ zu den an ihnen detektierten charakteristischen Merkmalen der Härtevorgang ausgeführt werden soll, wird dann durch die Regelungseinrichtung ECU der Wechselstromgenerator 12 angesteuert, so dass die Härte-Induktionsspulen 14a, 14b bestromt werden.

Die ersten Fördergänge weisen Niederhalter 40a, 40b auf, um die Werkstücke 10 während des Zuführens zu den Härte-Induktionsspulen 14a, 14b in ihren jeweiligen Fördermulden zu halten. Die Niederhalter 40a, 40b sind mit Niederhalter-Antrieben 40c, 40d gekoppelt, um in den jeweiligen Fördergängen befindliche Werkstücke in ihrer Beweglichkeit einzuschränken.

Abstromseitig zu den Härte-Induktionsspulen 14a, 14b sind Anlass-Induktionsspulen 42a, 42b angeordnet. In gleicher Weise wie die Härte-Induktionsspulen 14a, 14b sind in dem erläuterten Ausführungsbeispiel die Anlass-Induktionsspulen 42a, 42b elektrisch in Reihe geschaltet und mit dem durch die Regelungseinrichtung ECU angesteuerten Wechselstromgenerator 12 verbunden.

In nicht weiter veranschaulichter Weise können die Härte-Induktionsspulen 14a, 14b und/oder die Anlass-Induktionsspulen 42a, 42b von einem Kühlfluid (Wasser, Öl/Wasser-Emulsion, oder dergl.) durchströmt sein, dessen Durchsatz durch die jeweiligen Spulen ebenfalls durch die Regelungseinrichtung ECU beeinflusst sein kann.

Sowohl den Härte-Induktionsspulen 14a, 14b als auch den Anlass-Induktionsspulen 42a, 42b jeweils eine Abschreck-Einrichtung 46, 48 zum Benetzen der Werkstücke 10 mit Kühlflüssigkeit zugeordnet. Der Ausstoß von Kühlflüssigkeit (zeitlich und mengenmäßig) aus der jeweiligen Abschreck-Einrichtung 46, 48 ist ebenfalls durch die Regelungseinrichtung ECU gesteuert.

Zwischen den Härte-Induktionsspulen 14a, 14b und den Anlass-Induktionsspulen 42a, 42b sind zweite Fördergänge 50a, 50b angeordnet. Die zweiten Fördergänge 50a, 50b sind mit zweiten Antriebseinrichtungen 54a, 54b gekoppelt, welche den ersten Antriebseinrichtungen im Wesentlichen entsprechen und ebenfalls durch die Regelungseinrichtung ECU angesteuert werden um die Werkstücke 10 von den Härte-Induktionsspulen zu den Anlass-Induktionsspulen zu fördern. Auch die Anlass-Induktionsspulen 42a, 42b sind so nebeneinander angeordnet, dass von den zweiten Fördergängen 50a, 50b herangeförderte Werkstücke 10 synchron behandelt (angelassen) werden können.

Insgesamt wird durch die vorstehend beschriebene Induktionserwärmungsanlage ein kontinuierlicher Ausstoß von gehärteten Werkstücken auf mehreren Förderbahnen ermöglicht. Dabei kann durch das erfindungsgemäße Konzept, die Werkstücke auf ihrem Weg zu den Härte-Induktionsspulen bzw. den Anlass-Induktionsspulen zu synchronisieren und jeweils diese Spulen in Reihe geschaltet an den Wechselstromgenerator anzuschließen eine besonders kostengünstige, effiziente und qualitativ hochwertige Bearbeitung der Werkstücke sichergestellt werden.

Die Induktionserwärmungsanlage ist in einer Einfassung 60 angeordnet, in der eine Schutzgasatmosphäre aufrecht zu erhalten ist. Außerdem weist sie Auffangvorrichtungen 80, 80' für die Kühlflüssigkeit aus den Abschreck-Einrichtungen auf, damit diese gesammelt, gereinigt (gefiltert), abgekühlt und wieder verwendet werden kann.

Es versteht sich für einen Fachmann, dass einzelne Aspekte oder Merkmale der vorstehend beschriebenen unterschiedlichen Ausführungsformen auch untereinander kombinierbar sind.

## Patentansprüche

1. Eine Induktionserwärmungsanlage zur Wärmebehandlung von elektrisch leitenden Werkstücken (10), mit
- wenigstens zwei mit einem, hinsichtlich seiner Leistungsabgabe steuerbaren Wechselstromgenerator (12) zu verbindenden Härte-Induktionsspulen (14a, 14b), die
-- miteinander elektrisch in Reihe geschaltet sind, und
-- eine an die Gestalt wenigstens einer zu behandelnden Stelle der Werkstücke (10) angepasste Form haben, um die Werkstücke (10) zumindest an dieser Stelle mittels der Härte-Induktionsspulen (14a, 14b) zu erwärmen,
- einer der Zahl der Härte-Induktionsspulen (14a, 14b) entsprechenden Zahl von ersten Fördergängen (16a, 16b), die zumindest mit einem Teil ihrer Erstreckung aufstromseitig zu den Härte-Induktionsspulen (14a, 14b) angeordnet sind, um diesen die Werkstücke (10) zuzuführen,
- einer der Zahl der ersten Fördergänge (16a, 16b) entsprechenden Zahl von Werkstückeinzugsvorrichtungen (20a, 20b), um diesen aus wenigstens einer Quelle kommende Werkstücke (10) zuzuführen,
- ersten Antriebseinrichtungen (34a, 34b, 36a, 36b) um die Werkstückeinzugsvorrichtungen (20a, 20b) und/oder die ersten Fördergänge (16a, 16b) anzutreiben,
- einer Sensoreinrichtung (Sa, Sb), um die Relativposition von in zueinander benachbarten Werkstückeinzugsvorrichtungen oder Fördergängen befindlichen Werkstücken bezogen auf deren Förderrichtung zu erfassen und entsprechende Sensorsignale zu erzeugen, und wobei
- die Induktionserwärmungsanlage dazu eingerichtet ist, sie mit einer Regelungseinrichtung (ECU) zu verbinden, die in Abhängigkeit von den Sensorsignalen aus der Sensoreinrichtung (50a,50b) die Leistungsabgabe des steuerbaren Wechselstromgenerators (12) beeinflusst sowie die Antriebseinrichtungen (34a, 34b, 36a, 36b) für die Werkstückeinzugsvorrichtungen (20a, 20b) und/oder die ersten Fördergänge (16a,16b) im Sinne einer Synchronisation der Werkstücke (10) in unterschiedlichen Fördergängen (16a,16b) auf ihrem Weg zu den Härte-Induktionsspulen (14a, 14b) hin mit Ansteuersignalen beschickt.

2. Die Induktionserwärmungsanlage nach Anspruch 1, **dadurch gekennzeichnet, dass** die Härte-Induktionsspulen (14a, 14b) nebeneinander angeordnet sind.

3. Die Induktionserwärmungsanlage nach Anspruch 1 oder 2, **dadurch gekennzeichnet, dass** die Härte-Induktionsspulen (14a, 14b) abstromseitig zu den ersten Fördergängen (16a,16b) angeordnet sind.

4. Die Induktionserwärmungsanlage nach einem der vorhergehenden Ansprüche, **dadurch gekennzeichnet, dass** die ersten Fördergänge (16a,16b) Schraubenwalzen aufweisen, die parallel nebeneinander angeordnet sind, wobei durch paarweise nebeneinander angeordnete Schraubenwalzen jeweils eine Fördermulde gebildet ist, in der die Werkstücke (10) den Härte-Induktionsspulen (14a, 14b) zuzuführen sind.

5. Die Induktionserwärmungsanlage nach einem der vorhergehenden Ansprüche, **dadurch gekennzeichnet, dass** die Antriebseinrichtungen (24a, 34b; 36a, 36b) für die Werkstückeinzugsvorrichtungen (20a, 20b) und/oder die ersten Fördergänge (16a, 16b) durch die Regelungseinrichtung (ECU) so anzusteuern sind, dass die von den Werkstückeinzugsvorrichtungen (20a, 20b) auf die ersten Fördergänge (16a, 16b) geförderten Werkstücke (10) in direktem Kontakt aufeinander folgen.

6. Die Induktionserwärmungsanlage nach einem der vorhergehenden Ansprüche, **dadurch gekennzeichnet, dass** die ersten Fördergänge (16a, 16b) Niederhalter (40a, 40b) aufweisen, um die Werkstücke (10) während des Zuführens zu den Härte-Induktionsspulen (14a, 14b) in ihren jeweiligen Fördermulden zu halten.

7. Die Induktionserwärmungsanlage nach einem der vorhergehenden Ansprüche, **dadurch gekennzeichnet, dass** abstromseitig zu den Härte-Induktionsspulen (14a, 14b) Anlass-Induktionsspulen (42a, 42b) angeordnet sind.

8. Die Induktionserwärmungsanlage nach einem der vorhergehenden Ansprüche, **dadurch gekennzeichnet, dass** zwischen den Härte-Induktionsspulen (14a, 14b) und den Anlass-Induktionsspulen (42a, 42b) zweite Fördergänge (50a, 50b) angeordnet sind.

9. Die Induktionserwärmungsanlage nach einem der vorhergehenden Ansprüche, **dadurch gekennzeichnet, dass** die zweiten Fördergänge (50a, 50b) mit zweiten Antriebseinrichtungen (54a, 54b) gekoppelt sind, um die Werkstücke (10) von den Härte-Induktionsspulen (14a, 14b) zu den Anlass-Induktionsspulen (42a, 42b) zu fördern.

10. Die Induktionserwärmungsanlage nach einem der vorhergehenden Ansprüche, **dadurch gekennzeichnet, dass** die Sensoreinrichtung für jede der Härte-Induktionsspulen (14a, 14b) einen Sensor (Sa, Sb) aufweist, der dazu eingerichtet ist, charakteristische Stellen, wie Anfangskanten, Endkanten, Fasen, Einstiche, Kugellaufbahnen oder Schaltkanten (10', 10", 10''') an den Werkstücken (10) zu erfassen und entsprechende Sensorsignale für die Regelungseinrichtung (ECU) zu erzeugen.

11. Die Induktionserwärmungsanlage nach einem der vorhergehenden Ansprüche, **dadurch gekennzeichnet, dass** die Regelungseinrichtung (ECU) dazu eingerichtet und/oder programmiert ist, die Ansteuersignale (M1 ... M6) für die Antriebseinrichtungen (34a, 34b; 36a, 36b) und/oder die Fördergänge so zu erzeugen, dass ein Schlupf der Werkstücke in den jeweiligen Fördergängen bzw. Werkstückeinzugsvorrichtungen und/oder Abmessungstoleranzen der Werkstücke zumindest annähernd kompensiert wird, so dass die zu behandelnden Stellen der Werkstücke im Wesentlichen gleichzeitig die Härte-Induktionsspulen und/oder die Anlass-Induktionsspulen erreichen.

12. Die Induktionserwärmungsanlage nach einem der vorhergehenden Ansprüche, **dadurch gekennzeichnet, dass** die Niederhalter (40a, 40b) mit Niederhalter-Antrieben (40c, 40d) gekoppelt sind, um in den jeweiligen Fördergängen befindliche Werkstücke (10) in ihrer Beweglichkeit einzuschränken.

13. Die Induktionserwärmungsanlage nach einem der vorhergehenden Ansprüche, **dadurch gekennzeichnet, dass** den Härte-Induktionsspulen (14a,14b) und/oder den Anlass-Induktionsspulen (42a, 42b) jeweils eine Abschreck-Einrichtung (46, 48) zum Benetzen der Werkstücke (10) mit Kühlflüssigkeit zugeordnet ist.

14. Die Induktionserwärmungsanlage nach einem der vorhergehenden Ansprüche, **dadurch gekennzeichnet, dass** ein Ausstoßen von Kühlflüssigkeit aus der jeweiligen Abschreck-Einrichtung (46, 48) durch die Regelungseinrichtung (ECU) gesteuert ist.

15. Die Induktionserwärmungsanlage nach einem der vorhergehenden Ansprüche, **dadurch gekennzeichnet, dass** die Sensoreinrichtung (Sa, Sb) von der jeweiligen Härte-Induktionsspule (14a, 14b) soweit entfernt angeordnet ist, dass Störeinflüsse von einem Betreiben der Härte-Induktionsspulen (14a, 14b) und/oder dem Ausstoßen von Kühlflüssigkeit aus der Abschreck-Einrichtung (46, 48) auf die Sensoreinrichtung (Sa, Sb) minimiert sind.

16. Die Induktionserwärmungsanlage nach einem der vorhergehenden Ansprüche, **dadurch gekennzeichnet, dass** die Sensoreinrichtung eine Laser-Sende-/Empfangseinrichtung (Sa, Sb) aufweist.

17. Die Induktionserwärmungsanlage nach einem der vorhergehenden Ansprüche, **dadurch gekennzeichnet, dass** sie in einer Einfassung angeordnet ist, in der eine Schutzgasatmosphäre aufrecht zu erhalten ist.

18. Die Induktionserwärmungsanlage nach einem der vorhergehenden Ansprüche, **dadurch gekennzeichnet, dass** sie eine Auffangvorrichtung für die Kühlflüssigkeit aus der Abschreck-Einrichtung aufweist.

## Claims

1. An induction heating device for the heat treatment of electrically conductive workpieces (10), comprising:
- at least two hardening induction coils (14a, 14b) which are to be electrically connected to an alternating current generator (12), which is controllable with respect to its power output, wherein the at least two hardening induction coils (14a, 14b)
-- are connected in series to each other, and
-- have a shape which matches the form of at least one site of the workpiece (10) to be treated in order to heat the workpiece (10) at least at this site by means of the hardening induction coils (14a, 14b),
- a number of first conveyor lines (16a, 16b), the number of which corresponds to the number of hardening induction coils (14a, 14b), wherein the first conveyor lines (16a, 16b) are arranged with at least a part of their extent upstream to the hardening induction coils (14a, 14b) to supply the workpieces (10) to the hardening induction coils (14a, 14b),
- a number of workpiece feeder mechanisms (20a, 20b), the number of which corresponds to the number of first conveyer lines (16a, 16b), to supply workpieces from a source to the first conveyor lines,
- first drive apparatuses (34a, 34b, 36a, 36b) for driving the workpiece feeder mechanisms (20a, 20b) and/or the first conveyer lines (16a, 16b),
- a sensor apparatus (Sa, Sb) for determining, with respect to the transporting direction of the workpieces, the relative positions of the workpieces, which are located in the workpiece feeder mechanisms or in the conveyer lines adjacent to each other, and for generating respective sensor signals, and wherein
- the induction heating device is connected to a control apparatus (ECU), which affects, depending on the sensor signals from the sensor apparatus (Sa, Sb), the power output of the controllable alternating current generator (12) and feeds the driving apparatuses (34a, 34b, 36a, 36b) of the workpiece feeder mechanisms (20a, 20b) and/or the first conveyor lines (16a, 16b) for the purpose of a synchronization of the workpieces (10) in different conveyor lines (16a, 16b) on their way to the hardening induction coils (14a, 14b) with drive signals.

2. The induction heating device according to claim 1, **characterized in that** the hardening induction coils (14a, 14b) are arranged side-by-side.

3. The induction heating device according to claim 1 or 2, **characterized in that** the hardening induction coils (14a, 14b) are arranged downstream to the first conveyor lines (16a, 16b).

4. The induction heating device according to one of the preceding claims, **characterized in that** the first conveyor lines (16a, 16b) have screw cylinders which are arranged parallel and side-by-side, wherein a skip, in which the workpieces (10) are supplied to the hardening induction coils (14a, 14b), is formed by means of the screw cylinders arranged pairwise side-by-side.

5. Induction heating device according to one of the preceding claims, **characterized in that** the drive apparatuses (24a, 34b; 36a, 36b) for the work piece feeder mechanisms (20a, 20b) and/or the first conveyor lines (16a, 16b) are controlled by means of the control apparatus (ECU) in such a way that the workpieces (10) conveyed from the work piece feeder mechanisms (20a, 20b) to the first conveyor lines (16a, 16b) follow each other in direct contact.

6. The induction heating device according to one of the preceding claims, **characterized in that** the first conveyor lines (16a, 16b) have downholder, to hold the workpieces (10) down in their respective skips, while being supplied to the hardening induction coils (14a, 14b).

7. The induction heating device according to one of the preceding claims, **characterized in that** tempering inductions coils (42a, 42b) are arranged downstream to the hardening induction coils (14a, 14b).

8. The induction heating device according to one of the preceding claims, **characterized in that** second conveyor lines (50a, 50b) are arranged between the hardening induction coils (14a, 14b) and the tempering induction coils (42a, 42b).

9. The induction heating device according to one of the preceding claims, **characterized in that** the second conveyor lines (50a, 50b) are coupled to second driving apparatuses (54a, 54b) to convey the workpieces (10) from the hardening induction coils (14a, 14b) to the tempering induction coils (42a, 42b).

10. The induction heating device according to one of the preceding claims, **characterized in that** the sensor apparatus have one sensor (Sa, Sb) for each of the hardening induction coils (14a, 14b), wherein the sensor is adapted to detect characteristic sites like initial-edges, end-edges, chamfers, cut-ins, ball running tracks or switching-edges (10', 10", 10'") of the workpieces (10) and to generate corresponding sensor signals for the control apparatus (ECU).

11. The induction heating device according to one of the preceding claims, **characterized in that** the control apparatus (ECU) is adapted and/or programmed to generate the control signals (M1 ... M6) for the drive apparatuses (34a, 34b; 36a, 36b) and/or the conveyor lines in such a way that the slip of the workpieces in the respective workpiece conveyor line or workpiece feeder mechanism and/or dimensional tolerances of the workpieces are at least approximately compensated so that the sides of the work pieces to be treated essentially reach the hardening induction coils and/or the tempering induction coils at the same time.

12. The induction heating device according to one of the preceding claims, **characterized in that** the downholder (40a, 40b) are coupled to downholder drives (40c, 40d) to limit the mobility of the workpieces (10) in their respective conveyor lines.

13. The induction heating device according to one of the preceding claims, **characterized in that** a quenching apparatus (46, 48) for sprinkling the workpieces (10) with cooling liquid is attached to the hardening induction coils (14a, 14b) and/or to the tempering induction coils (42a, 42b) respectively.

14. The induction heating device according to one of the preceding claims, **characterized in that** the ejection of cooling liquid from the respective quenching apparatus (46, 48) is controlled by means of the control apparatus (ECU).

15. The induction heating device according to one of the preceding claims, **characterized in that** the sensor apparatus (Sa, Sb) is arranged in such a distance to the respective hardening induction coils (14a, 14b) that disturbing influences resulting from the operation of the hardening induction coils (14a, 14b) and/or the ejection of cooling liquid from the quenching apparatus (46, 48) on the sensor apparatus are minimized.

16. The induction heating device according to one of the preceding claims, **characterized in that** the sensor apparatus has a laser transmitting/receiving apparatus (Sa, Sb).

17. The induction heating device according to one of the preceding claims, **characterized in that** it is arranged in an enclosure, wherein an inert atmosphere had to be maintained in the enclosure.

18. The induction heating device according to one of the preceding claims, **characterized in that** it has a retaining device for the cooling liquid from the quenching apparatus.

## Revendications

1. Installation de chauffage par induction pour le traitement thermique de pièces (10) électroconductrices, comprenant
- au moins deux bobines d'induction pour trempe (14a, 14b) à relier à une génératrice de courant alternatif (12) pouvant être contrôlée en ce qui concerne sa puissance de sortie, lesquelles bobines
-- sont reliées électriquement en série l'une à l'autre et
-- possèdent une forme adaptée à la forme d'au moins un endroit à traiter desdites pièces (10) afin de réchauffer les pièces au moins à cet endroit au moyen desdites bobines d'inductions pour trempe (14a, 14b),
- un nombre de premiers couloirs de transport (16a, 16b) correspondant au nombre de bobines d'induction pour trempe (14a, 14b), lesquels couloirs sont disposés au moins pour une partie de leur étendue en amont des bobines d'induction pour trempe (14a, 14b) afin d'amener les pièces (10) à ces dernières,
- un nombre de dispositifs d'introduction de pièces (20a, 20b) correspondant au nombre desdits premiers couloirs de transport (16a, 16b) afin d'amener à ces derniers les pièces (10) en provenance d'au moins d'une source,
- des premiers dispositifs d'entraînement (34a, 34b, 36a, 36b) pour entraîner lesdits dispositifs d'introduction de pièces (20a, 20b) et/ou les premiers couloirs de transport (16a, 16b),
- un dispositif de détection (Sa, Sb) pour détecter la position relative des pièces se trouvant dans les dispositifs d'introduction de pièces ou les couloirs de transport voisins les uns des autres, considérée par rapport à leur direction de transport, et pour produire des signaux de détection correspondants, et
- l'installation de chauffage par induction étant reliée à un dispositif de régulation (ECU) qui influence la puissance de sortie de ladite génératrice de courant alternatif (12) contrôlable en fonction des signaux de détection émis par le dispositif de détection (Sa, Sb) et qui alimente par signaux de commande les dispositifs d'entraînement (34a, 34b, 36a, 36b) pour les dispositifs d'introduction de pièces (20a, 20b) et/ou les premiers couloirs de transport (16a, 16b) dans le sens d'une synchronisation des pièces (10) situées dans les différents couloirs de transport (16a, 16b) pendant leur transport vers les bobines d'induction pour trempe (14a, 14b).

2. Installation de chauffage par induction selon la revendication 1, **caractérisée en ce que** les bobines d'induction pour trempe (14a, 14b) sont disposées les unes à côté des autres.

3. Installation de chauffage par induction selon la revendication 1 ou 2, **caractérisée en ce que** les bobines d'induction pour trempe (14a, 14b) sont disposées en aval des premiers couloirs de transport (16a, 16b).

4. Installation de chauffage par induction selon l'une des revendications précédentes, **caractérisée en ce que** les premiers couloirs de transport (16a, 16b) présentent des rouleaux à vis sans fin disposés parallèlement les uns à côté des autres, ces rouleaux disposés par paires les uns à côté des autres formant à chaque fois une auge de transport dans laquelle les pièces (10) seront amenées aux bobines d'induction pour trempe (14a, 14b).

5. Installation de chauffage par induction selon l'une des revendications précédentes, **caractérisée en ce que** les dispositifs d'entraînement (24a, 34a ; 36a, 36b) pour les dispositifs d'introduction de pièces (20a, 20b) et/ou les premiers couloirs de transport (16a, 16b) sont commandés de telle sorte par le dispositif de régulation (ECU) que les pièces (10) transportées par les dispositifs d'introduction de pièces (20a, 20b) sur les premiers couloirs de transport (16a, 16b) se succèdent les unes aux autres en contact direct.

6. Installation de chauffage par induction selon l'une des revendications précédentes, **caractérisée en ce que** les premiers couloirs de transport (16a, 16b) présentent des organes de maintien en position basse (40a, 40b) pour maintenir dans leur auge de transport respective les pièces (10) pendant leur amenée aux bobines d'induction pour trempe (14a, 14b).

7. Installation de chauffage par induction selon l'une des revendications précédentes, **caractérisée en ce que** des bobines d'induction pour revenu (42a, 42b) sont disposées en aval des bobines d'induction pour trempe (14a, 14b).

8. Installation de chauffage par induction selon l'une des revendications précédentes, **caractérisée en ce que** des seconds couloirs de transport (50a, 50b) sont disposés entre les bobines d'induction pour trempe (14a, 14b) et les bobines d'induction pour revenu (42a, 42b).

9. Installation de chauffage par induction selon l'une des revendications précédentes, **caractérisée en ce que** lesdits seconds couloirs de transport (50a, 50b) sont couplés à des seconds dispositifs d'entraînement (54a, 54b) pour transporter les pièces (10) des bobines d'induction pour trempe (14a, 14b) aux bobines d'induction pour revenu (42a, 42b).

10. Installation de chauffage par induction selon l'une des revendications précédentes, **caractérisée en ce que** le dispositif de détection présente un détecteur (Sa, Sb) pour chacune des bobines d'inductions pour trempe (14a, 14b), lequel détecteur est conçu pour détecter sur les pièces des endroits caractéristiques, tels qu'arêtes initiales, arêtes terminales, chanfreins, encoches, pistes de roulement de billes ou arêtes de commutation (10', 10", 10'"), et pour produire des signaux de commande correspondants destinés au dispositif de régulation (ECU).

11. Installation de chauffage par induction selon l'une des revendications précédentes, **caractérisée en ce que** le dispositif de régulation (ECU) est conçu et/ou programmé pour produire des signaux de commande (M1 ... M6) pour les dispositifs d'entraînement (34a, 34b ; 36a, 36b) et/ou les couloirs de transport de telle manière qu'un glissement des pièces (10) dans les couloirs de transport et les dispositifs d'introduction de pièces respectifs et/ou les tolérances dimensionnelles des pièces seront compensés au moins approximativement si bien que les endroits des pièces à traiter atteindront pour l'essentiel simultanément les bobines d'induction pour trempe et/ou les bobines d'induction pour revenu.

12. Installation de chauffage par induction selon l'une des revendications précédentes, **caractérisée en ce que** les organes de maintien en position basse (40a, 40b) sont couplés à des entraînements d'organe de maintien en position basse (40c, 40d) pour limiter dans leur liberté de mouvement les pièces (10) se trouvant dans leurs couloir de transport respectifs.

13. Installation de chauffage par induction selon l'une des revendications précédentes, **caractérisée en ce qu'**un dispositif de refroidissement (46, 48) destiné à arroser les pièces (10) avec un liquide de refroidissement est associé à chacune des bobines d'induction pour trempe (14a, 14b) et/ou bobines d'induction pour revenu (42a, 42b).

14. Installation de chauffage par induction selon l'une des revendications précédentes, **caractérisée en ce que** l'éjection de liquide de refroidissement depuis le dispositif de refroidissement (46, 48) correspondant est commandée par le dispositif de régulation (ECU).

15. Installation de chauffage par induction selon l'une des revendications précédentes, **caractérisée en ce que** le dispositif de détection (Sa, Sb) est disposé à une distance si importante de la bobine d'induction pour trempe (14a, 14b) correspondante que les effets perturbateurs, qui sont liés au fonctionnement des bobines d'induction pour trempe (14a, 14b) et/ou à l'éjection de liquide de refroidissement par le dispositif de refroidissement (46, 48) et qui agissent sur le dispositif de détection (Sa, Sb), sont minimisés.

16. Installation de chauffage par induction selon l'une des revendications précédentes, **caractérisée en ce que** le dispositif de détection présente un dispositif d'émission/de réception à laser (Sa, Sb).

17. Installation de chauffage par induction selon l'une des revendications précédentes, **caractérisée en ce qu'**elle est disposée dans une enceinte dans laquelle il est possible de maintenir une atmosphère à gaz protecteur.

18. Installation de chauffage par induction selon l'une des revendications précédentes, **caractérisée en ce qu'**elle présente un dispositif collecteur pour le liquide de refroidissement provenant du dispositif de refroidissement.
